# EUROPÄISCHE PATENTANMELDUNG

(11) **EP 0 563 517 A1**
(43) Veröffentlichungstag der Anmeldung: **06.10.1993**
(21) Anmeldenummer: 93100705.8
(22) Anmeldetag: 19.01.1993
(51) Int. Cl.: E05F 15/16

(54) **Kombinierter Schub- und Zugantrieb**

(30) Priorität: 31.03.1992 DE 4210523
(71) Anmelder: Alltronik electronics GmbH, D-99994 Schlotheim (DE)
(72) Erfinder: Gimbel, Karl-Heinz, Ing., O-5706 Schlotheim (DE)
(74) Vertreter: Weber, Dieter, Dr.

(57) **Zusammenfassung**

Die vorliegende Erfindung betrifft einen kombinierten Schub- und Zugantrieb, insbesondere für Tore, speziell für Garagentore, mit einem elektrischen Antriebsmotor (1) und mit Kraftübertragungselementen vom Motor auf ein zu bewegendes Teil (20). Um einen solchen Antrieb zu schaffen, bei welchem der Kraftverlauf entlang der gesamten Bewegungsstrecke des zu bewegenden Teiles sehr gleichmäßig und möglichst konstant ist, und welcher nur eine geringe Motorantriebsleistung erfordert, wobei gleichzeitig der Antrieb auch relativ preiswert und mit einfachen Bauteilen herstellbar sein soll, wird erfindungsgemäß vorgeschlagen, daß als ein Kraftübertragungselement eine Kette (2) vorgesehen ist, deren Glieder (2') gelenkig in einer Zwangsführung (31) in deren Längsrichtung frei bewegbar sind, und welche entlang eines Abschnittes der Kette (2) mit einem Antriebselement (4) in Eingriff stehen.

## Beschreibung

Die vorliegende Erfindung betrifft einen kombinierten Schub- und Zugantrieb für entlang eines vorgegebenen Weges hin und her bewegbare Teile, insbesondere für Tore und speziell für Garagentore, wobei der Antrieb einen elektrischen oder auch pneumatischen Antriebsmotor und Kraftübertragungselemente aufweist, welche die Kraft von dem Motor auf das zu bewegende Teil übertragen.

Derartige Antriebe sind im Prinzip für Garagentore bekannt. Zu diesen gehören z. B. Spindelantriebe, bei welchen eine Spindel von einem Motor drehbar angetrieben wird und dabei eine drehfest geführte Hülse entlang der Spindel bewegt, die ihrerseits mit einem Hebelmechanismus für das Garagentor verbunden ist. Die Kraft kann auch über ein Getriebe auf ein Drehgelenk übertragen werden, welches an einem Hebel das Garagentor öffnet oder schließt. Schließlich sind auch Jalousietore bekannt, bei welchen eine Wickelwelle von einem Antriebsmotor über ein Getriebe angetrieben wird. Bei letzteren ist der Platzbedarf für die Wickelwelle und vor allem für die aufgewickelte Jalousie sehr nachteilig. Bei den erstgenannten Arten von Torantrieben liegt ein wesentlicher Nachteil vor allem darin, daß ein Kraftübertragungselement entweder um eine feststehende Achse gedreht oder entlang eines linearen Weges verfahren wird, während das jeweilige Tor z. B. in Führungen läuft und bei seiner Bewegung sich nicht um eine feststehende Achse dreht oder aber die Drehachse des Tores außerhalb der Drehachse des Antriebsmechanismus liegt. Unmittelbar an ihrer Drehachse angetriebene Tore haben wiederum den Nachteil, daß die Motordrehzahl für einen entsprechenden Antrieb außerordentlich stark untersetzt werden muß und daß im entsprechenden Getriebe hohe Reibungsverluste auftreten, wobei außerdem extrem große Kräfte von den Getriebeelementen übertragen werden müssen, so daß dieses entsprechend groß, aufwendig und teuer wird.

Ein Teil der bekannten Antriebe weist dabei auch den Nachteil auf, daß die von dem Antriebsmotor und den Kraftübertragungselementen aufzubringende bzw. zu übertragende Kraft entlang des Verfahrweges des Tores beträchtlich variiert, und zwar in erster Linie aufgrund ungünstiger effektiver Hebelverhältnisse, wenn nämlich die aufgebrachten Kräfte nicht genau in Richtung der Bewegung angreifen, in welcher das Tor oder wesentliche Teile hiervon bewegt werden.

Demgegenüber liegt der vorliegenden Erfindung die Aufgabe zugrunde, einen Antrieb für hin und her bewegbare Teile, insbesondere für Tore, zu schaffen, bei welchem der Kraftverlauf entlang der gesamten Bewegungsstrecke des zu bewegenden Teiles sehr gleichmäßig und möglichst konstant ist und welcher nur eine geringe Motorantriebsleistung erfordert, wobei gleichzeitig der Antrieb auch relativ preiswert und mit einfachen Bauteilen herstellbar sein soll.

Diese Aufgabe wird dadurch gelöst, daß der Antrieb als kombinierter Schub- und Zugantrieb ausgebildet ist und als Kraftübertragungselement eine Kette vorgesehen ist, deren Glieder gelenkig miteinander verbunden und in einer Zwangsführung in deren Längsrichtung frei bewegbar und von einem mit den Kettengliedern in Eingriff tretenden Antriebselement antreibbar sind. Daß eine solche Kette in jeder gewünschten Richtung Zugkräfte auf einen Gegenstand übertragen kann, wenn sie von einem entsprechenden Antriebselement angetrieben wird, ist selbstverständlich und bedarf keiner weiteren Erläuterung. Bei der erfindungsgemäßen Ausgestaltung des Antriebes kann die Kette jedoch auch Schubkräfte übertragen, da sie nämlich in einer Zwangsführung in einer Richtung, d. h. in der Längsrichtung der Zwangsführung, frei beweglich ist, seitlich aber nicht ausweichen kann.

Es ist klar, daß wegen der gelenkigen Verbindung der Kettenglieder die Zwangsführung entlang eines weitgehend beliebigen Weges verlaufen kann, vorzugsweise also in einer solchen Richtung geführt wird, entlang welcher die Kraftübertragung auf das zu bewegende Teil optimal ist, ohne daß große Kräfte senkrecht zu irgendwelchen Führungen für das Teil aufgebracht werden müssen, was bei aus dem Stand der Technik bekannten Antrieben zu entsprechend hohen Reibungsverlusten führt, welche durch entsprechend starke Antriebe ausgeglichen werden müssen. Zumindest in einer Ebene hat man mit einer Kette nahezu beliebige Möglichkeiten, diese entlang gekrümmter Wege zu führen, so daß sich auch kompliziertere Bewegungsstrecken, wie sie z. B. die bekannten Garagenschwingtore ausführen, ohne weiteres mit einer solchen Kette und einer entsprechenden Zwangsführung vollführen lassen. Die üblichen Schwingtore für Garagen vollführen im allgemeinen eine Bewegung um eine Schwenkachse, deren Lager wiederum um eine weitere Achse verschwenkt wird. Ein bestimmter Punkt des Garagentores bewegt sich dann während des Öffnens oder Schließens entlang einer Zykloide oder entlang einer anderen komplizierten Kurve, der jedoch eine Führungsschiene bzw. ein Führungsprofil für die Kette ohne weiteres angepaßt werden kann. Aber auch Schwingtore und dergleichen lassen sich sehr einfach und mit optimal gleichmäßigem Kraftverlauf mit Hilfe des erfindungsgemäßen Antriebes öffnen oder schließen, indem nämlich eine entsprechende Zwangsführung für die Kette genau entlang eines Kreisbogens um die Schwenkachse des Tores verläuft.

Vorzugsweise sind die einzelnen Ketten nicht nur gelenkig, sondern in Längsrichtung der Kette auch spielfrei miteinander verbunden. Die Spielfreiheit in Längsrichtung der Ketten stellt sicher, daß es beim Umkehren der Antriebsrichtung, also von Schub auf Zug oder umgekehrt, keinen nennenswerten Totgang in dem System gibt.

Bevorzugt ist dabei eine Ausführungsform der Erfindung, bei welcher die Kette nach Art einer Fahrrad- oder Motorradkette ausgebildet ist. Derartige Ketten sind zum einen leicht und preiswert kommerziell erhältlich, sie können mit sehr einfachen Vorrichtungen beliebig verlängert oder verkürzt werden und sie sind in der Lage, auch relativ große Kräfte zu übertragen.

Dementsprechend sollte das Antriebselement für die Kette zweckmäßigerweise ein Ritzel sein, welches von der Motorwelle, vorzugsweise über ein zwischengeschaltetes Getriebe, angetrieben wird.

Alternativ könnten die Kettenglieder auch über Kardangelenke oder ähnliche zweiachsige Elemente, wie z. B. vorzugsweise spielfrei ineinandergreifende Ösen an jedem der Enden der Kettenglieder, miteinander verbunden sein, wobei derartige Ketten mit einer entsprechenden Zwangsführung entlang beliebiger Raumkurven Zug- und Drückkräfte übertragen können.

In der bevorzugten Ausführungsform ist die Zwangsführung ein mit mindestens einem Längsschlitz versehenes Hohlprofil bzw. eine entsprechende Profilschiene. Dabei versteht es sich, daß das Profil dieser Schiene zumindest in einem Teilbereich des Querschnittes dem Profil der Kettenglieder angepaßt sein sollte. Je nach Material lassen sich derartige Profilschienen leicht in einem Strangpreßverfahren herstellen. Die Anpassung der inneren Profilform einer solchen Schiene sollte allerdings möglichst sorgfältig erfolgen, damit die Kette im Innern des Profils quer zur Längsrichtung der Kette praktisch keinerlei Spiel hat, gleichzeitig aber noch ohne große Reibungsverluste in Längsrichtung der Profilschiene bewegbar ist. Es versteht sich, daß die Kette bzw. die Profilschiene hierzu auch eine Schmierung aufweisen können.

Zweckmäßig ist es außerdem, wenn ein Kettenmagazin für die Aufnahme eines Abschnittes bzw. eines Endes der Kette vorgesehen ist. In einem solchen Kettenmagazin können wiederum Führungen für die Kette vorhanden sein und zur Verringerung des Platzbedarfs eines solchen Magazins kann eine entsprechende Führung vorzugsweise spiralförmig sein.

Außerdem kann bei Bedarf auch eine federnd vorgespannte Wickelwelle bzw. allgemein ein federnd gespannter Aufwickelmechanismus für die Kette in dem Magazin vorgesehen sein. Das Antriebselement braucht dann keine nennenswerte Kraft mehr auf die in das Magazin einzuschiebende Kette zu übertragen.

Das Antriebselement wird zweckmäßigerweise zwischen dem Kettenmagazin und der Zwangsführung bzw. der Profilschiene angeordnet, kann jedoch gegebenenfalls auch innerhalb eines dem Magazin zugewandten Endabschnittes der Führungsschiene angeordnet sein. Hierzu weist die Führungsschiene an ihrer Unterseite oder Oberseite zweckmäßigerweise eine Öffnung auf, durch welche das Antriebselement hindurchgreifen kann, oder aber die Kette läuft im wesentlichen frei zwischen dem Magazin und der Zwangsführung, so daß in diesem Zwischenraum das Antriebselement bzw. Ritzel eingreifen kann.

Es versteht sich außerdem, daß der seitliche Schlitz in der Zwangsführung vorzugsweise dafür gedacht ist, die Verbindung der Kette bzw. eines Endes der Kette mit dem zu bewegenden Teil herzustellen, wobei diese Verbindung vorzugsweise aus einem ebenfalls noch in der Profilschiene geführten Laufwagen besteht, von dem aus eine den Schlitz durchgreifende Verbindung zum Tor vorgesehen ist.

Die Profilschiene bzw. deren Schlitz ist vorzugsweise durch einen oder zwei elastische Streifen abgedeckt, die seitlich neben dem Schlitz an der Profilschiene angeordnet sind und die entweder den Schlitz ganz überdecken oder aber einander wechselseitig so überdecken, daß auch der Schlitz abgedeckt ist, wobei sich lediglich ein schmaler Stift oder ein ähnliches Verbindungselement durch die Abdeckung hindurch erstreckt, um die Verbindung zwischen Kette bzw. Laufwagen und dem beweglichen Teil (Tor) sicherzustellen, wobei im Betrieb dieser schmale Stift entlang eines solchen Abdeckstreifens bzw. zwischen zwei solchen Abdeckstreifen verläuft und dabei den oder die Abdeckstreifen lokal anhebt.

Derartige Streifen schützen die Profilschiene und deren Kettenführung vor allem vor Verschmutzung und sorgen für einen langen störungs- und wartungsfreien Betrieb.

Ein besonderer Vorteil des Kettenantriebes liegt auch darin, daß der Weg, den ein beliebiges Kettenglied, z. B. dasjenige, welches unmittelbar mit dem zu bewegenden Teil verbunden ist, einen in fester Beziehung zu den Umdrehungen der Motorwelle stehenden Weg zurücklegt, so daß aus den Drehungen der Motorwelle exakt auf die Position des Kettenendes und damit auch auf die Position des zu bewegenden Teils geschlossen werden kann. Man kann also in einfacher Weise Positionsmelder mit der Motorwelle verbinden, die lediglich die Zahl der Drehungen bzw. die Winkelstellung der Motorwelle erfassen müssen, die eindeutig auch die Position des Tores oder dergleichen festlegen.

Die Profilschiene kann gemäß einer Ausführungsform der Erfindung ein auf die optimierte Bahnform für die Zug- und Schubbewegung gekrümmtes, vorgefertigtes Element sein. Je nach Material der Führungsschiene kann jedoch auch deren Anpassung und Krümmung noch jeweils vor Ort erfolgen. Die Vorfertigung und Krümmung ab Werk ist jedoch zu bevorzugen, weil dann die Toleranzen der Führung am geringsten gehalten werden können, so daß vor allem auch die Schubkräfte weitgehend reibungsfrei und verlustarm ohne Verkanten der Kettenglieder übertragen werden können.

Bevorzugt ist eine Ausführungsform der Erfindung, bei welcher die Profilschiene sowohl eine innere Kettenführung als auch eine äußere Führung für einen Laufwagen aufweist. Der Laufwagen ist unmittelbar an ein Garagentor oder dergleichen gekoppelt und ist seinerseits durch einfache Handgriffe von der Kette zu lösen und mit dieser zu verbinden. Im entriegelten Zustand, d.h. wenn Kette und Laufwagen voneinander getrennt sind, kann das Tor auch von Hand geöffnet und geschlossen werden, wobei der Laufwagen in einem äußeren Abschnitt der Profilschiene geführt wird, so daß das Garagentor die normale, gewünschte Bewegung ausführt. Für den Motorantrieb wird der Laufwagen mit dem freien Ende der Kette verriegelt und kann so durch den Antrieb der Kette bewegt werden. Diese Konstruktion hat den Vorteil, daß die Kräfte, welche durch die Zwangsführung der Kette und auch des Tores auftreten können, vor allem über den Laufwagen auf dessen Führung und die Profilschiene übertragen werden, während die Verriegelung zwischen Laufwagen und Kette so gestaltet werden kann, daß praktisch keine Querkräfte auf die Kettenführung selbst übertragen werden, die damit einem geringeren Verschleiß ausgesetzt ist, so daß die spielfreie Kettenführung auf Dauer erhalten bleibt.

Gemäß einer besonderen Ausführungsform der Erfindung kann die Profilschiene aus bündig zusammensetzbaren, vorgefertigten Abschnitten bestehen. Dabei kann beispielsweise eine Palette von Standardformen vorgesehen werden, die den erfahrungsgemäß vorhandenen Bereich optimaler Bewegungsbahnen zumindest näherungsweise abdecken. Zum Beispiel können dies gleichmäßige 30°-, 45°-, 60°- oder 90°-Bogen mit festen Radien sein oder auch gerade Stücke in fest vorgegebenen Längenabschnitten von z. B. 30 bis 60 cm. Diese einzelnen Profilabschnitte können jeweils stirnseitig Zapfen/Lochverbindungen oder äußere Klammerverbindungen aufweisen, die für eine exakte Ausrichtung der einzelnen Abschnitte hintereinander sorgen, so daß in den Übergangsbereichen kein Stoß und auch keine Stufe oder dergleichen entsteht, welche die freie Bewegung der Kette in Längsrichtung der Führung beeinträchtigen könnten.

Die Zwangsführung bzw. die Profilschienen sollten wegen der guten Formbarkeit vorzugsweise aus Aluminium bzw. einer Aluminiumlegierung hergestellt werden. Auch Stahlführungen sind ohne weiteres für den erfindungsgemäßen Zweck geeignet. Wichtig ist jedoch eine gewisse Festigkeit, damit sich der Profilquerschnitt auch unter Belastung, z. B. bei Belastung der Kette auf Druck in gekrümmten Bereichen, nicht nennenswert verändert.

Weitere Vorteile, Merkmale und Anwendungsmöglichkeiten der vorliegenden Erfindung ergeben sich aus der folgenden Beschreibung bevorzugter Ausführungsformen und der dazugehörigen Figuren. Es zeigen:
- Figur 1: eine Draufsicht auf eine Antriebseinheit und eine Profilschiene mit Kettenführung,
- Figur 2: einen Querschnitt durch eine Profilschiene,
- Figuren 3 a - c: eine Seitenansicht auf ein Ende der Führungsschiene mit dem Antriebselement und dem anschließenden Kettenmagazin,
- Figur 4: eine vergrößerte Seitenansicht des Antriebes,
- Figur 5: einen Schnitt durch die Verbindung zweier Kettenglieder und versetzt hierzu einen Schnitt durch die Kettenführung,
- Figur 6: eine Detailansicht eines in eine Kette eingreifenden Antriebselementes gemäß einer weiteren Ausführungsform und
- Figur 7: einen Querschnitt durch ein alternatives Führungsprofil mit elastischen Schlitzabdeckungen.

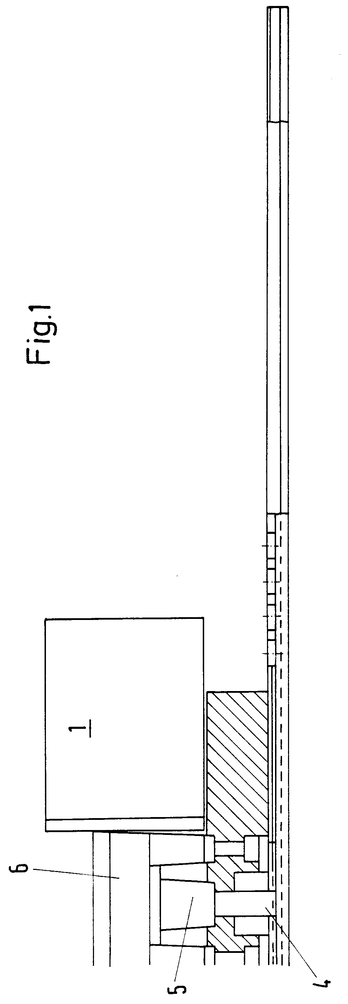

In Figur 1 ist mit 1 ein Motor bezeichnet, dessen Welle 6 über ein Zwischengetriebe 5 ein Ritzel 4 antreibt, welches mit einer in Figur 1 im einzelnen nicht dargestellten Fahrradkette 2 in Eingriff steht. Die Fahrradkette 2 läuft in einer Kettenführung 31, die in einer Profilschiene 3 ausgebildet ist und deren Innenquerschnitt dem Querschnitt der Kette 2 genau angepaßt ist, wobei die Profilschiene 3 auf einer Seite, die in einer Ebene senkrecht zur Papierebene liegt, einen durchgehenden Längsschlitz 33 aufweist. Die in der Darstellung gemäß Figur 1 gerade erscheinende Profilschiene 3 kann in einer Ebene senkrecht zur Papierebene weitgehend beliebig gekrümmt sein, wobei generell möglichst sanfte und gleichmäßige Krümmungen zu bevorzugen sind, da diese eine bessere und verlustärmere Kraftübertragung gewährleisten.

Damit die Kette 2 möglichst reibungsarm in der Kettenführung 31 der Profilschiene 3 gleitet, sollte zweckmäßigerweise ein Schmiermittel, z. B. ein Fett oder Kettenöl in die Kettenführung eingegeben bzw. eingesprüht werden. Die Kettenführung kann auf ihrer Innenseite auch eine Oberflächenbeschichtung aus einem möglichst verschleißarmen und gegenüber der Kette gleitfähigen Material aufweisen.

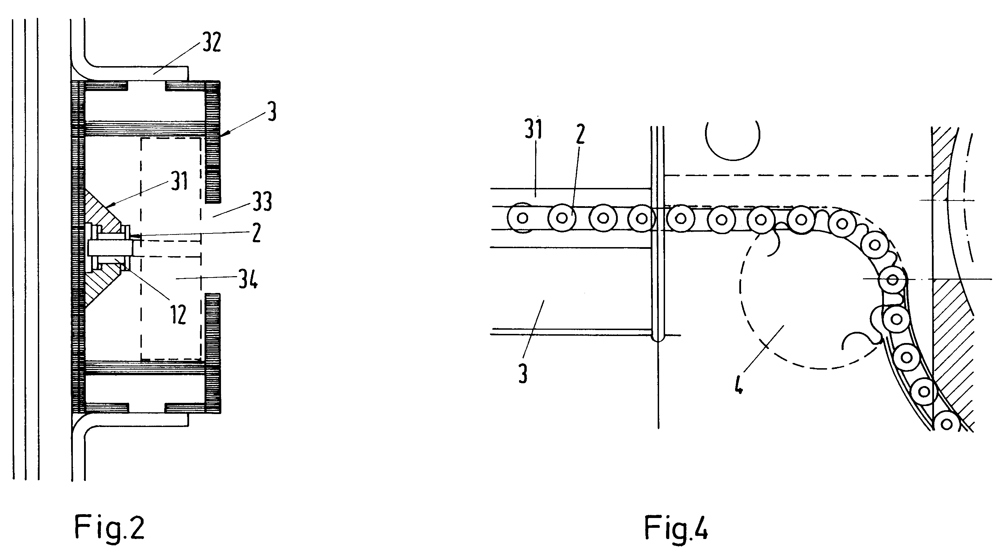

In Figur 2 erkennt man in einer mehr schematischen Darstellung das Profil der Kettenführung 31, wobei die Kettenführung hier so ausgelegt ist, daß von zwei gegenüberliegenden Seiten der Kette zwei Stege zwischen den seitlichen Verbindungselementen der Kettenglieder eingreifen und dabei auf der Oberfläche der Hohlnieten 12 aufliegen, welche die Kettenglieder in Querrichtung zusammenhalten.

Mit 34 ist in Figur 2 ein nur schematisch durch einen gestrichelten Umriß angedeuteter Laufwagen bezeichnet, der zweckmäßigerweise rollen- oder kugelgelagert im Profil der Profilschiene 3 läuft und über passende Verbindungselemente, die sich durch den Schlitz 33 erstrecken, mit dem Garagentor oder dergleichen verbunden sind, welches durch den Antrieb bewegt werden soll. Der Laufwagen 34 ist z.B. über einen durch Seilzug entriegelbaren Stift mit dem Endglied oder mit mehreren Gliedern der Kette 2 verbunden und wird so von der Kette 2 in der Profilschiene 3 mitgenommen. Der Laufwagen 34 kann jedoch auch von der Kette 2 getrennt werden, so daß das Garagentor oder dergleichen in diesem Zustand ohne Bewegung der Kette von Hand geöffnet oder geschlossen werden kann, wobei der Laufwagen 34 die ordnungsgemäße Führung des Garagentores entlang der gewünschten Bewegungsbahn sicherstellt.

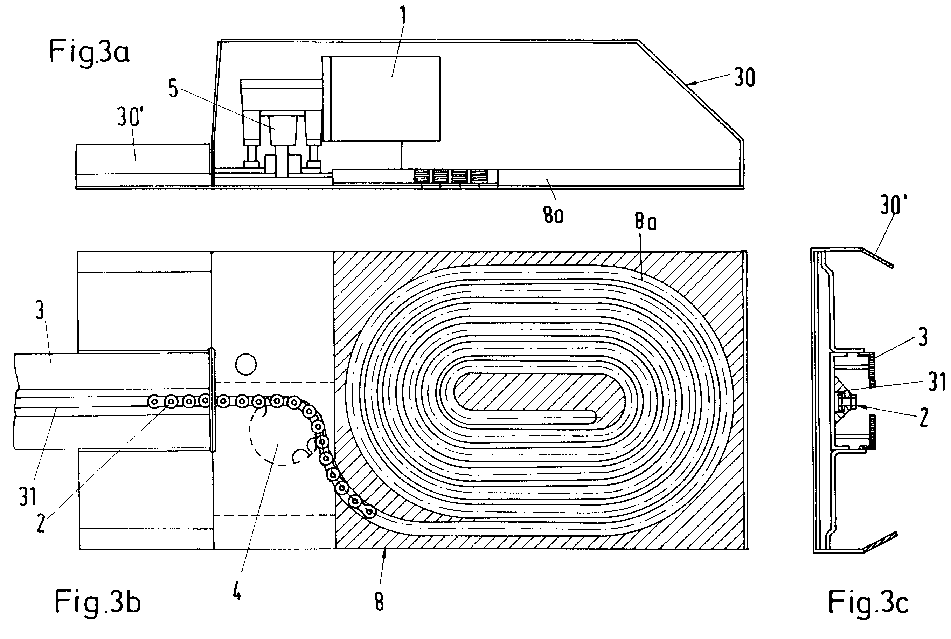

In Figur 3b erkennt man links den Endabschnitt der Profilschiene 3 und das anschließende Antriebsritzel 4. Die Unterseite des Endabschnittes in der Profilschiene 3 kann dabei offen sein, damit das Antriebsritzel dort bereits in die Kettenglieder eingreifen kann, oder kann vor dem Antriebsritzel enden. Die Kettenglieder werden über einen 90°-Bogen von den Zähnen 16 des Antriebsritzels mitgenommen und dann in eine weitere Führung 8a eingeschoben, die den Anfang eines Spiralmagazins 8 bildet, welches in Figur 3 in horizontaler Richtung auseinandergezogen dargestellt ist. Das Kettenmagazin 8 weist eine spiralförmige Führung 8a auf, wobei die Gesamtlänge dieser spiralförmigen Führung mindestens der Länge des Bewegungsweges entspricht, den das vordere Kettenende zurücklegen muß, um z. B. ein Garagentor vollständig zu öffnen und zu schließen. Im allgemeinen reicht hierfür eine Länge von ca. 3 m bis 3,50 m aus.

Figur 3a ist eine Ansicht auf die Bauteile gemäß Figur 3b von unten. Man erkennt in Figur 3a ein Gehäuse 30, welches sowohl das Kettenmagazin 8 mit der Kettenführung 8a als auch den Motor 1 mit dem Zwischengetriebe 5 umfaßt. An das Gehäuse 30 schließt sich links in Figur 3b noch ein Abdeck- und Befestigungsteil 30' an, an welchem der Endabschnitt der Profilschiene 3 angeordnet ist.

Figur 3c zeigt einen Schnitt durch die Profilschiene 3 und das Abdeck- und Befestigungsteil 30' in dem Bereich kurz vor Eintritt der Kette 2 in das Gehäuse 30. Man erkennt durch den Vergleich mit Figur 2, daß Figur 2 einen zentralen Ausschnitt aus Figur 3c wiedergibt, so daß hier auf die Beschreibung von Figur 2 Bezug genommen werden kann.

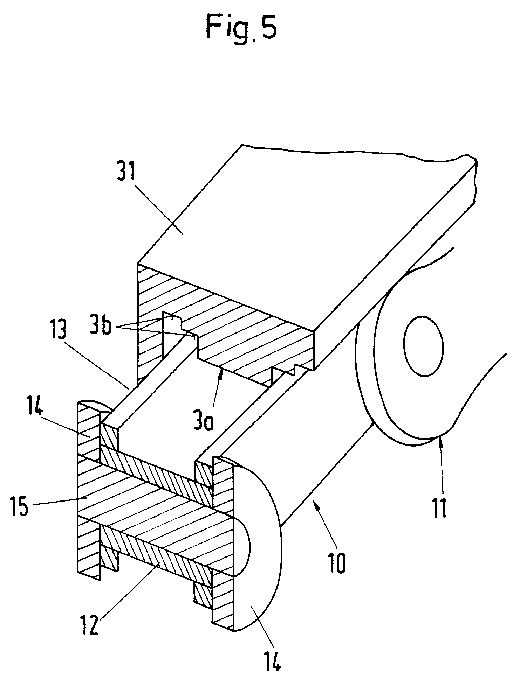

Figur 4 zeigt vergrößert einen Ausschnitt aus Figur 3b im Bereich zwischen Profilschiene 31 und Kettenmagazin 8. Die Kette 2 wird etwa in einem 90°-Bogen um das Antriebsritzel 5 herumgeführt, von wo es in die Führung 8a des Kettenmagazins 8 eingeschoben bzw. aus diesem herausgezogen wird, je nach Drehrichtung des Antriebsritzels 4. Die Anlage der Kette entlang eines 90°-Bogens an dem Ritzel 4 stellt den Eingriff zwischen dem Ritzel und der Kette sicher. Es kann dabei zweckmäßig sein, die Kettenführung 31 zumindest an der dem Ritzel abgewandten Seite der Kette noch bis in den Bereich hinein zu verlängern, in welchem das Ritzel 4 schon mit der Kette in Eingriff steht, gegebenenfalls auch entlang des von der Kette beschriebenen 90°-Bogens und bis zur Ketten aufnahme 8a hin.

Figur 5 zeigt eine Detailansicht der Kette 2 und des Kettenprofils 3. Die Kette 2 kann eine herkömmliche Fahrradkette sein, die aus zwei Typen von Kettengliedern 10, 11 besteht, die im folgenden anschaulich als Innenglieder 10 und Außenglieder 11 bezeichnet werden. Die Innenglieder 10 bestehen aus zwei parallel angeordneten und in Längsrichtung verlaufenden Platten 13, die an ihren beiden Enden durch einen Hohlniet 12 miteinander verbunden sind. Die Außenglieder 11 bestehen aus zwei parallelen Außenplatten 14, deren lichter Abstand gerade dem Außenabstand der Innenplatten 13 entspricht, so daß sie beidseitig außen auf den Innenplatten 13 aufliegen können. Die Außenplatten 14 sind verbunden durch einen Niet 15, der sich gleichzeitig auch durch das Innere des Hohlniets 12 erstreckt und dessen Außendurchmesser auch gerade dem Innendurchmesser des Hohlniets 12 entspricht, so daß eine gelenkige und gleichzeitig spielfreie Verbindung zwischen den Innengliedern 10 und den Außengliedern 11 entsteht. In Figur 5 erkennt man außerdem etwas versetzt zu der Schnittebene durch die Verbindung zweier Kettenglieder 10, 11 auch den Querschnitt der Profilschiene 3. Dieser Querschnitt ist dem Querschnitt der Kettenglieder 10, 11 angepaßt und weist insbesondere einen mittigen Profilsteg 3a auf, der von oben wie von unten mit der Außenseite der Hohlnieten 12 in spielfreien Gleiteingriff tritt. Zusätzliche Profilnuten 3b beiderseits des Profilsteges 3a nehmen die Kanten der Innenplatten 13 bzw. der Außenplatten 14 der Kettenglieder 10, 11 auf und sorgen für eine zusätzliche Führung, wobei jedoch die Führung ohne weiteres auch auf den Profilsteg 3a beschränkt werden kann. Die Außenplatten sind ebenso wie die Innenplatten an ihren Außenkanten etwas ausgekehlt, so daß sie auch bei Abwinkelung in gekrümmten Bereichen der Kette in einem vorgegebenen Profil konstanter lichter Weite zwischen den Führungswänden gegenüberliegender Profilnuten 3b nicht verklemmen können.

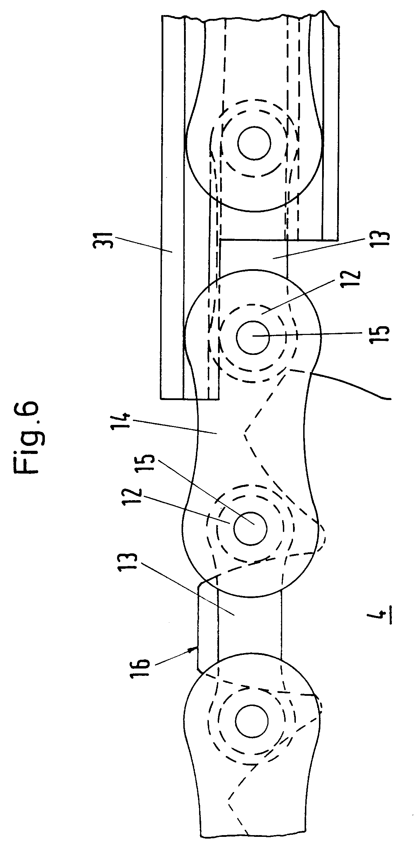

Figur 6 zeigt wiederum einen vergrößerten Ausschnitt der Kette 2 und eines in die Kettenglieder 10, 11 eingreifenden Antriebsritzels 4, wobei hier die Kette 2 gerade und nicht über einen 90°-Bogen verlaufend dargestellt ist. Die Kettenführung 31 erstreckt sich jedoch in diesem Fall bis nahe an das Antriebsritzel 4 heran, so daß die Kettenglieder nicht in radialer Richtung von dem Antriebsritzel 4 weggedrückt werden.

Die einzelnen Zähne 16 des Antriebsritzels 4 sind so bemessen und in solchen Abständen angeordnet, daß sie genau zwischen die beiden Hohlnieten 12 eines Kettengliedes 10 passen und zwischen diesen im wesentlichen spielfrei eingreifen, wobei auch die Vollnieten 15 eines Außengliedes 11 exakt denselben mittigen Abstand voneinander haben wie die Hohlnieten 12 eines Innengliedes 10, so daß zwischen allen aufeinanderfolgenden Hohlnieten 12 sowohl bei den Außengliegern als auch bei den Innengliedern immer derselbe lichte Abstand besteht. Wegen der Spielfreiheit der gelenkigen Verbindung zwischen den einzelnen Kettengliedern 10, 11 und der präzisen Führung in der Kettenführung 3 hat der Antrieb keinen nennenswerten Totgang, d. h. bei der Umkehrung der Antriebsrichtung folgt auch das Ende der Kette, welches im allgemeinen mit einem Tor oder dergleichen verbunden ist, unmittelbar der Bewegung der vom Ritzel erfaßten Kettenglieder.

Im rechten Teil der Figur 6 ist auch der Endabschnitt der Kettenführung vor dem Ritzel 4 dargestellt, wobei die einzelnen Ebenen der Führungsstege bzw. Nuten 3a, 3b der Schiene durch gestrichelte Linien angedeutet sind.

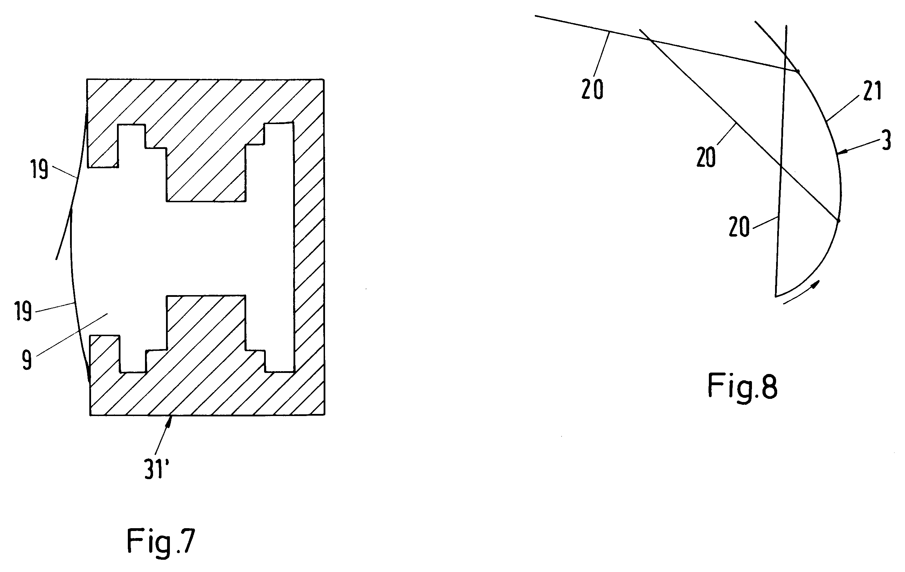

Figur 7 zeigt nochmals ein anderes Profil einer Kettenführung 3 ohne die Kette 2. Der Schlitz 9 der Führung 3 ist dabei durch zwei elastische Bahnen 19 aus einem gummielastischem Kunststoffmaterial oder dergleichen abgedeckt. Das Endglied der Kette 2 ist z. B. durch einen verlängerten Vollniet 15 mit einem zu bewegenden Teil verbunden, welches neben der Kettenführung 31 liegt, z. B. einem Rollwagen 34, wobei der verlängerte Niet 15 den Schlitz 9 durchgreift und in seinem Bereich auch die beiden elastischen Streifen 19 auseinanderdrückt. Bewegt sich der verlängerte Niet 15 entlang des Schlitzes 9, so werden durch die Bewegung dieses Niets die beiden elastischen Streifen 19 auseinandergedrückt, verschließen sich jedoch wieder hinter dem Niet 15, sobald dieser eine entsprechende Stelle passiert hat. Selbstverständlich können derartige sich überlappende elastische Bahnen stattdessen oder zusätzlich auch am Schlitz 33 der Profilschiene 3 zwischen Rollwagen und Tor vorgesehen sein.

In Figur 8 ist schematisch ein Garagentor 20 in einer Schnittansicht in verschiedenen Bewegungszuständen dargestellt, wobei sich die Unterkante des Garagentores 20 entlang einer gekrümmten Bahn 21 bewegt, die z. B. von einer Führungsschiene 3 gebildet wird. Gegebenenfalls kann auch das obere Ende des Garagentores in einer passenden Führungsschiene bewegt werden, ohne daß jedoch in dieser Führungsschiene ein Antrieb vorgesehen ist.

Das in Figur 3a zu einem länglichen Oval auseinandergezogen dargestellte Spiralmagazin kann selbstverständlich auch die Form einer gleichmäßig gekrümmten oder aus allmählich kleiner werdenden Halbkreisbögen zusammengesetzten Spirale haben und kann insbesondere im Zentrum auch eine federnd vorgespannte Wickelwelle aufweisen, auf welche ein Seilzug aufgewickelt ist, der mit einem Ende der Kette 8 verbunden ist. Das Einziehen bzw. Einschieben der Kette in das Spiralmagazin kann dadurch beträchtlich erleichtert werden.

Der erfindungsgemäße Kettenantrieb ist ein kombinierter Zug- und Schubantrieb, der wenig Platz und eine geringe Antriebsleistung erfordert und dennoch ein sicheres und schnelles Öffnen und Schließen von Garagentoren bzw. allgemein ein hin und her bewegen von Gegenständen entlang einer vorgegebenen Bahn ermöglicht. Die einzelnen Komponenten des Antriebes sind teilweise leicht im Handel erhältliche Standardkomponenten und im übrigen ohne großen Aufwand herstellbar, insbesondere wenn große Stückzahlen von Führungsschienen entweder in fest vorgegebenen Abschnitten oder in fest vorgegebenen, vollständigen Bewegungsbahnen hergestellt werden.

## Patentansprüche

1. Kombinierter Schub-Zugantrieb, insbesondere für Tore, speziell für Garagentore, mit einem elektrischen Antriebsmotor (1) und mit Kraftübertragungselementen vom Motor auf ein zu bewegendes Teil, **dadurch gekennzeichnet**, daß als ein Kraftübertragungselement eine Kette (2) vorgesehen ist, deren Glieder (2') gelenkig in einer Zwangsführung in deren Längsrichtung frei bewegbar sind und welche entlang eines Abschnittes der Kette mit einem Antriebselement (4) in Eingriff stehen.

2. Antrieb nach Anspruch 1, **dadurch gekennzeichnet**, daß die Kettenglieder gelenkig und in Längsrichtung der Kette im wesentlichen spielfrei miteinander verbunden sind.

3. Antrieb nach Anspruch 2, **dadurch gekennzeichnet**, daß die Kette (2) nach Art einer Fahrrad- oder Motorradkette ausgebildet ist.

4. Antrieb nach einem der Ansprüche 1 bis 3, **dadurch gekennzeichnet**, daß als Antriebselement ein direkt oder über ein Zwischengetriebe (5) mit der Motorwelle (6) verbundenes Ritzel (4) ist.

5. Antrieb nach einem der Ansprüche 1 bis 4, **dadurch gekennzeichnet**, daß die Zwangsführung ein mit einem Längsschlitz versehenes Hohlprofil ist.

6. Antrieb nach Anspruch 5, **dadurch gekennzeichnet**, daß der Querschnitt des Profils bzw. der Profilschiene dem Querschnitt der Kettenglieder angepaßt ist.

7. Antrieb nach einem der Ansprüche 1 bis 6, **dadurch gekennzeichnet**, daß ein Kettenmagazin zur Aufnahme eines Abschnittes der Kette vorgesehen ist.

8. Antrieb nach Anspruch 7, **dadurch gekennzeichnet**, daß das Magazin eine im wesentlichen spiralförmige Führung für die Kette aufweist.

9. Antrieb nach Anspruch 7 oder 8, **dadurch gekennzeichnet**, daß das Kettenmagazin einen federnd vorgespannten Aufwickelmechanismus aufweist.

10. Antrieb nach einem der Ansprüche 7 bis 9, **dadurch gekennzeichnet**, daß ein Antriebselement zwischen dem Magazin und der Profilschiene und/oder in einem dem Magazin zugewandten Endabschnitt der Profilschiene angeordnet ist.

11. Antrieb nach einem der Ansprüche 1 bis 10, **dadurch gekennzeichnet**, daß ein Ende der Kette über ein durch den Schlitz der Profilschiene ragendes Verbindungselement mit dem zu bewegenden Teil verbunden ist.

12. Antrieb nach einem der Ansprüche 1 bis 11, **dadurch gekennzeichnet**, daß die Profilschiene entsprechend einem gewünschten Verlauf vorgeformt ist.

13. Antrieb nach Anspruch 12, **dadurch gekennzeichnet**, daß die Schiene in einer Ebene gekrümmt ist, welche parallel zu der Wand des Profils verläuft, in welcher der Schlitz angeordnet ist.

14. Antrieb nach einem der Ansprüche 1 bis 13, **dadurch gekennzeichnet**, daß das Führungsprofil aus mehreren bündig zusammensetzbaren vorgeformten Abschnitten besteht.

15. Antrieb nach einem der Ansprüche 1 bis 14, **dadurch gekennzeichnet**, daß der Führungsschlitz durch mindestens eine den Schlitz überlappende Bahn aus elastischem Material abgedeckt ist, welche durch ein Verbindungselement zwischen dem zu bewegenden Teil und der Kette wegdrückbar ist.

16. Antrieb nach Anspruch 5 oder einem der auf Anspruch 5 rückbezogenen Ansprüche, **dadurch gekennzeichnet**, daß das als Profilschiene ausgebildete Hohlprofil neben einer Kettenführung zusätzlich ein Führungsprofil für einen von der Kette bewegbaren Laufwagen (34) aufweist, der sowohl mit der Kette (2) als auch mit dem zu bewegenden Teil (20) verbunden ist.

17. Antrieb nach Anspruch 16, **dadurch gekennzeichnet**, daß die Verbindung zwischen dem Laufwagen (34) und der Kette (2) durch einfache Handgriffe bzw. durch Entriegelung lösbar ist.
